## Europäisches Patentamt
## European Patent Office
## Office européen des brevets

(19)

(11)  **EP 0 966 609 B1**

(12)  **EUROPÄISCHE PATENTSCHRIFT**

(45) Veröffentlichungstag und Bekanntmachung des Hinweises auf die Patenterteilung:
**04.10.2000   Patentblatt 2000/40**

(21) Anmeldenummer: **98924235.9**

(22) Anmeldetag: **28.04.1998**

(51) Int Cl.$^7$: **F04B 43/04**, F15C 5/00

(86) Internationale Anmeldenummer:
**PCT/EP98/02507**

(87) Internationale Veröffentlichungsnummer:
**WO 98/51929 (19.11.1998 Gazette 1998/46)**

(54) **MIKROMEMBRANPUMPE**

MICROMEMBRANE PUMP

POMPE A MICROMEMBRANE

(84) Benannte Vertragsstaaten:
**CH DE FR GB LI NL**

(30) Priorität: **12.05.1997   DE 19719862**

(43) Veröffentlichungstag der Anmeldung:
**29.12.1999   Patentblatt 1999/52**

(73) Patentinhaber: **FRAUNHOFER-GESELLSCHAFT ZUR FÖRDERUNG DER ANGEWANDTEN FORSCHUNG E.V.**
**80636 München (DE)**

(72) Erfinder:
  • **LINNEMANN, Reinhard**
    **72076 Tübingen (DE)**
  • **RICHTER, Martin**
    **81677 München (DE)**

  • **KLUGE, Stefan**
    **D-80997 München (DE)**
  • **WOIAS, Peter**
    **D-81735 München (DE)**

(74) Vertreter: **Schoppe, Fritz, Dipl.-Ing. et al**
**Schoppe, Zimmermann & Stöckeler**
**Patentanwälte**
**Postfach 71 08 67**
**81458 München (DE)**

(56) Entgegenhaltungen:
**EP-A- 0 412 270          EP-A- 0 703 364**
**WO-A-92/22763          DE-A- 4 143 343**
**GB-A- 2 248 891          US-A- 5 542 821**
**US-A- 5 585 011**

EP 0 966 609 B1

## Beschreibung

Die vorliegende Erfindung bezieht sich auf eine Mikromembranpumpe und insbesondere eine solche Mikromembranpumpe, die eine Pumpenmembran, einen Pumpenkörper und mit passiven Rückschlagventilen versehene Einlaß- und Auslaßöffnungen aufweist.

Gemäß dem Stand der Technik existiert eine Vielzahl unterschiedlicher Mikromembranpumpen, wobei als Antriebskonzepte überwiegend elektromagnetische, thermische und piezoelektrische Antriebsprinzipien eingesetzt werden. Elektromagnetische Antriebskonzepte sind beispielsweise bei E. Quandt, K. Seemann, *Magnetostrictive Thin Film Microflow Devices,* Micro System Technologies 96, S. 451-456, VDE-Verlag GmbH, 1996, beschrieben. Thermische Antriebskonzepte sind beispielsweise bei B. Büstgens u.a., *Micromembrane Pump Manufactured by Molding,* Proc. Actuator 94; Bremen 1994, S. 86-90, dargelegt. In der EP-A-0134614 und bei H.T.G. Van Lintel u.a., A *Piezoelectric Micropump Based on Micromachining of Silicon,* Sensors&Actuators, 15, 1988, S. 153-167, sind piezoelektrische Antriebsprinzipien erläutert.

Piezoelektrische Antriebe basieren auf dem Einsatz von Piezokeramiken, die eine Bewegung der Pumpmembran hervorrufen und damit in Kombination mit einer Ventil- bzw. Anschluß-Einheit eine Pumpwirkung verursachen. Es existieren mehrere Varianten von piezoelektrisch angetriebenen Mikromembranpumpen, die mit aktiven Ventilen, mit passiven Rückschlagventilen oder auch mit ventillosen fluidischen Anschlüssen arbeiten. Derartige ventillose fluidische Anschlüsse sind beispielsweise bei A. Olsson u.a.: *The First Valve-less Diffuser Gas Pump,* Proceedings MEMS 97, S. 108-113, Nagoya, Japan, 1997, offenbart.

In der EP-A-0134614 ist eine peristaltische Pumpe beschrieben, die drei Piezomembranen nutzt, wobei eine Piezomembran am Einlaß, eine andere am Auslaß und eine weitere zwischen diesen beiden plaziert ist. Durch die periodische Bewegung der Piezomembran am Einlaß und die zu derselben phasenverschobene Bewegung der Piezomembranen am Auslaß und in der Mitte wird letztendlich eine Pumpbewegung eines zu pumpenden Mediums erreicht.

Es sind ferner an einer Seite fest eingespannte piezoelektrische Biegewandler bekannt, wobei an einem freien Ende der Biegewandler die Pumpmembran befestigt ist. Derartige Antriebseinheiten sind mit einer Ventileinheit, die aus passiven Rückschlagventilen besteht, kombiniert.

Bei den genannten ventillosen Piezomembranpumpen wird wie bei den oben genannten peristaltischen Pumpen eine Piezomembran als Antriebseinheit genutzt, wobei eine fluidische Anschlußeinheit verwendet wird, die aus konisch zulaufenden Kanälen mit unterschiedlichen Strömungswiderständen besteht. Durch diese pyramidenförmigen Diffusoren wird ein richtungsabhängiger Strömungswiderstand definiert, der eine Pumpwirkung in eine Richtung verursacht. Auch eine derartige Mikropumpe mit ventilloser Anschlußeinheit kann wie die anderen Mikropumpen im Betrieb einen Gegendruck aufbauen, der allerdings beim Abschalten der Antriebseinheit nicht mehr aufrecht erhalten werden kann.

Eine bekannte Mikropumpe mit einem elektrostatischen Antrieb ist bei R. Zengerle: *Mikromembranpumpen als Komponenten für Mikro-Fluidsysteme;* Verlag Shaker; Aachen 1994; ISBN 3-8265-0216-7, beschrieben, und ferner in der DE 41 43 343 A1 gezeigt. Eine derartige Mikropumpe ist in Fig. 1 dargestellt.

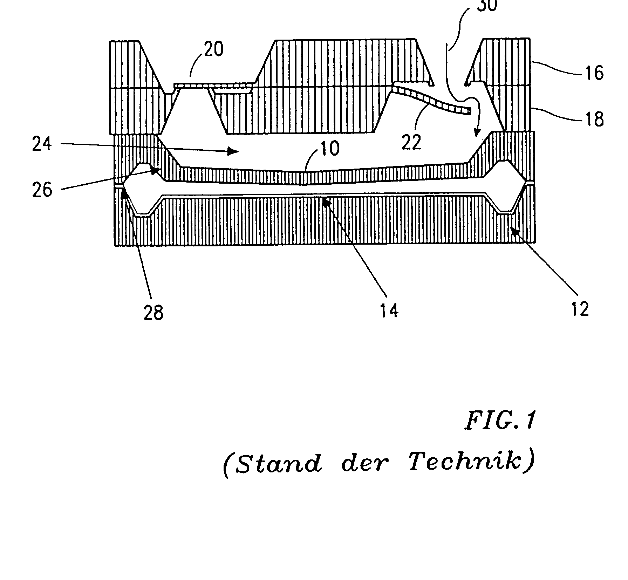

Die in Fig. 1 gezeigte Mikropumpe besteht aus vier Siliziumchips, wobei zwei der Chips den elektrostatischen Aktor, der aus einer flexiblen Pumpmembran 10 und einer Gegenelektrode 12, die mit einer Isolationsschicht 14 versehen ist, besteht, gebildet ist. Die beiden anderen Siliziumchips 16 und 18 definieren einen Pumpenkörper, in dem Klappenventile 20 und 22 angeordnet sind. Zwischen dem Pumpenkörper, der durch die Siliziumchips 16 und 18 gebildet ist, und der flexiblen Pumpmembran 10, die umfangsmäßig mit dem Pumpenkörper verbunden ist, ist eine Pumpkammer 24 gebildet. Zwischen den Aufhängungsvorrichtungen 26 der flexiblen Pumpmembran 10 und der Gegenelektrode ist eine Abstandsschicht 28 angeordnet.

Bei Anlegen einer elektrischen Spannung an den elektrostatischen Aktor findet eine elektrostatische Anziehung der elastischen Pumpmembran 10 an die starre Gegenelektrode 12 statt, wodurch ein Unterdruck in der Pumpkammer 24 erzeugt wird, der zum Einströmen des Pumpmediums über das Einlaßklappenventil 22 führt, siehe Pfeil 30. Nach dem Abschalten der Spannung und einem Ladungsausgleich durch Kurzschluß der Elektroden relaxiert die Pumpenmembran und verdrängt das Pumpmedium über das Auslaßklappenventil 20 aus der Pumpkammer.

Im Gegensatz zu dem oben beschriebenen elektrostatischen Antrieb wird bei einer piezoelektrisch betriebenen Mikropumpe die Pumpmembran durch piezoelektrische Kräfte bewegt, wobei ein piezoelektrischer Kristall mit der Pumpmembran verbunden ist. Das Anlegen einer elektrischen Spannung an den Piezokristall bewirkt eine Kontraktion bzw. Elongation des Kristalls und damit eine Verbiegung der Membran, die zusammen mit einer Ventileinheit, wie sie beispielsweise in Fig. 1 gezeigt ist, schließlich eine Pumpwirkung hervorruft. Mit Ausnahme der unterschiedlichen Antriebseinrichtung könnte eine piezoelektrisch betriebene Mikropumpe ebenfalls den in Fig. 1 beschriebenen Aufbau aufweisen.

Die vorstehend beschriebenen elektrostatisch angetriebenen Mikromembranpumpen weisen in der Form, die beispielsweise in Fig. 1 dargestellt ist, eine Mehrzahl von Nachteilen auf.

Bedingt durch den geringen Hub des elektrostatischen Aktors, typischerweise 5 µm, und das vergleichsweise große Pumpkammervolumen, wobei die Höhe der Pumpkammer typischerweise 450 Um beträgt, weist eine solche Pumpe ein sehr geringes Kompressionsverhältnis auf. Als Kompressionsverhältnis wird das Verhältnis des verdrängten Pumpvolumens zu dem gesamten Pumpkammervolumen bezeichnet. Durch dieses geringe Kompressionsverhältnis ist eine Förderung kompressibler Medien, wie z.B. von Gasen, nicht möglich, da die Kompressibilität solcher Medien in der Regel über dem Kompressionsverhältnis der Pumpe liegt.

Ferner weist die Pumpkammer der beschriebenen bekannten Pumpen eine ungünstige strömungstechnische, sowie nicht blasentolerante Geometrie auf. Lufteinschlüsse in einem flüssigen Pumpmedium sammeln sich in der Pumpkammer und verschlechtern durch ihre vergleichsweise hohe Kompressibilität die Pumpeigenschaften erheblich. Ferner ist aufgrund des schlechten Kompressionsverhaltens ein selbstansaugendes Verhalten nicht zu erzielen. Bei den bekannten Mikropumpen steht durch den verwendeten Herstellungsprozeß die Pumpmembran ferner in elektrischem Kontakt mit dem geförderten Medium. Da im Betrieb Spannungen in der Größenordnung von 200 V am Aktor auftreten, können im Störfall erhebliche elektrische Potentiale am Pumpmedium anliegen, die je nach Anwendung zu Störungen externer Komponenten führen können. Ferner werden bekannte Mikropumpen beim derzeitigen Stand der Technik durch Kleben einzelner Chips montiert, wobei diese Montage nicht den Anforderungen an eine rationelle Fertigung genügt.

Einen großen Teil der oben genannten Nachteile weisen auch bestehende piezoelektrische Mikromembranpumpen auf. Grundsätzlich besteht ein wesentlicher Vorteil der piezoelektrischen gegenüber der elektrostatischen Mikropumpe in der Möglichkeit, den Aktor auch mit geringeren Spannungen als 200 V anzusteuern. Die Pumprate kann dadurch sowohl über die Frequenz als auch über die Ansteuerspannung eingestellt werden, was hinsichtlich der Ansteuerelektronik zu erheblichen Vereinfachungen führen kann.

Die DE 195 46 570 CI zeigt eine Mikromembranpumpe, die durch eine strukturierte Siliziumscheibe, in der Rückschlagventile gebildet sind, und eine mit derselben verbundene Glasscheibe gebildet ist. Die DE 694 01 250 T2 zeigt eine Fluidpumpe ohne passive Rückschlagventile. Die in dieser Druckschrift offenbarte Pumpe weist einen kleinen Pumpraum auf, um eine Befüllung der Pumpe allein aufgrund von Kapillarkräften zu ermöglichen.

Die Aufgabe der vorliegenden Erfindung besteht darin, eine Mikromembranpumpe zu schaffen, die die oben genannten Nachteile des Stands der Technik beseitigt, die Förderung kompressibler Medien ermöglicht, ein selbstansaugendes Verhalten zeigt und blasentolerant ist.

Diese Aufgabe wird durch eine Mikromembranpumpe gemäß Anspruch 1 gelöst.

Eine weitere Aufgabe der vorliegenden Erfindung besteht darin, ein Verfahren zum Herstellen eines Pumpenkörpers für eine derartige Mikromembranpumpe zu schaffen.

Diese Aufgabe wird durch ein Verfahren gemäß Anspruch 8 gelöst.

Die vorliegende Erfindung basiert auf der Erkenntnis, daß ein entscheidendes Verhaltenskriterium einer Mikromembranpumpe das Kompressionsverhältnis, nämlich das Verhältnis zwischen dem verdrängten Pumpvolumen und dem gesamten Pumpkammervolumen ist.

Eine Mikromembranpumpe gemäß der vorliegenden Erfindung weist eine Pumpmembran, die mittels einer Antriebseinrichtung in eine erste und eine zweite Stellung bewegbar ist, einen Pumpenkörper, der mit der Pumpmembran verbunden ist, um eine Pumpkammer zwischen denselben festzulegen, wobei der Pumpenkörper aus zwei Halbleiterscheiben gebildet ist, in denen einstückig mit denselben jeweils ein Ventilsitz und eine Ventilklappe gebildet sind, wobei die beiden Halbleiterscheiben derart verbunden sind, daß jeweils durch einen Ventilsitz der einen Halbleiterscheibe und eine Ventilklappe der anderen Halbleiterscheibe ein passives Rückschlagventil gebildet ist, wobei eines der passiven Rückschlagventile in einer die beiden Halbleiterscheiben durchdringenden Einlaßöffnung angeordnet ist, während das andere der Rückschlagventile in einer die beiden Halbleiterscheiben durchdringenden Auslaßöffnung angeordnet ist. Die Pumpmembran vergrößert bei der Bewegung aus der ersten in die zweite Stellung das Volumen der Pumpkammer um ein Hubvolumen und verringert bei der Bewegung aus der zweiten in die erste Stellung das Volumen der Pumpkammer um dieses Hubvolumen. Gemäß der vorliegenden Erfindung genügt das Verhältnis ε des Hubvolumens zu dem Volumen der Pumpkammer, wenn die Pumpmembran in der ersten Stellung ist, folgender Gleichung:

$$\varepsilon \geq \left( \frac{p_0}{p_0 - |\Delta p_{crit}|} \right)^{\frac{1}{\gamma}} - 1$$

wobei $p_0$ der Atmosphärendruck ist, $\gamma$ der Adiabatenkoeffizient ist, und $\Delta p_{crit}$ der maximale von der Ventilgeometrie und der Ventilbenetzung abhängige Druckwert, der nötig ist, um die Ventile zu öffnen.

Ein derartiges Kompressionsverhältnis kann bei einem Ausführungsbeispiel erreicht werden, indem als Antriebseinrichtung eine elektrostatische Antriebseinrichtung verwendet wird, deren elektrostatischer Aktor durch die Pumpmembran und eine Gegenelektrode gebildet ist, wobei die Pumpmembran eine im wesentlichen planare Form aufweist, derart, daß sie in der ersten Endstellung außerhalb der Einlaßöffnung und der Auslaßöffnung an dem Pumpenkörper anliegt.

Ferner kann ein derartiges Kompressionsverhältnis vorteilhaft durch einen Pumpenkörper erreicht werden, der durch zwei an Hauptoberflächen derselben verbundene Halbleiterplatten gebildet ist, wobei das Einlaß- und das Auslaß-Ventil jeweils durch in die Halbleiterscheiben geätzte Ventilsitze und Ventilklappen gebildet sind, die in Ventilwannen, die die Einlaßöffnung und die Auslaßöffnung definieren, angeordnet sind. Dabei ist die der Pumpmembran zugewandte Halbleiterplatte bei bevorzugten Ausführungsbeispielen gedünnt, um eine flache Ventilwanne zwischen der der Pumpmembran zugewandten Oberfläche der Halbleiterplatte und den Ventilklappen zu definieren.

Die vorliegende Erfindung schafft ein Verfahren zum Herstellen eines derartigen Pumpenkörpers, das zunächst das Strukturieren jeweils einer ersten Hauptoberfläche einer ersten und einer zweiten Halbleiterscheibe zur Festlegung einer Ventilklappenstruktur des Einlaßventils und einer Ventilsitzstruktur des Auslaßventils in der ersten Scheibe und einer Ventilklappenstruktur des Auslaßventils und einer Ventilsitzstruktur des Einlaßventils in der zweiten Scheibe umfaßt. Nachfolgend werden jeweils eine Ventilklappenwannenstruktur und eine Ventilöffnungswannenstruktur in einer vorbestimmten Beziehung zu den Ventilklappenstrukturen und den Ventilsitzstrukturen in jeweils einer zweiten Hauptoberfläche der ersten und der zweiten Halbleiterscheibe gebildet. Die ersten Hauptoberflächen der ersten und der zweiten Halbleiterscheibe werden im Anschluß derart verbunden, daß jeweils eine Ventilklappenstruktur zu einer Ventilsitzstruktur eine vorbestimmte Beziehung aufweist. Im Anschluß wird zumindest eine der Halbleiterscheiben von der zweiten Hauptoberfläche her gedünnt, woraufhin jeweils die zweite Hauptoberfläche der ersten und der zweiten Halbleiterscheibe zumindest im Bereich der Ventilklappenwannenstruktur und der Ventilöffnungswannenstruktur geätzt wird, um die Ventilklappen freizulegen und den Ventilsitz zu öffnen. Die beiden letztgenannten Schritte des Dünnens und Ätzens können dabei in einem Arbeitsgang erfolgen.

Die vorliegende Erfindung schafft eine Mikromembranpumpe, die ein selbstansaugendes Verhalten zeigt, zur Förderung kompressibler Medien geeignet ist und ferner eine Toleranz gegenüber Blasen aufweist. Die vorliegende Erfindung schafft somit eine Mikropumpe, die mit ihrer einfachen Handhabung vielfältige neue Einsatzmöglichkeiten bietet. Ferner ist das Pumpenkonzept gemäß der vorliegenden Erfindung aufgrund des stapelförmigen Aufbaus generell tauglich für eine Endmontage auf Waferebene und ist somit im Vergleich zu zahlreichen anderen Konzepten fertigungstechnisch sehr günstig.

Weiterbildungen der vorliegenden Anmeldung sind in den abhängigen Ansprüchen dargelegt.

Bevorzugte Ausführungsbeispiele der vorliegenden Erfindung werden nachfolgend bezugnehmend auf die beiliegenden Zeichnungen näher erläutert. Es zeigen:

Fig. 1         eine bekannte Mikromembranpumpe mit einem elektrostatischen Antrieb;

Fig. 2a) und b)     zwei Ausführungsbeispiele einer Mikromembranpumpe gemäß der vorliegenden Erfindung;

Fig. 3a) und b)     zwei weitere Ausführungsbeispiele von Mikromembranpumpen gemäß der vorliegenden Erfindung;

Fig. 4         einen elektrostatischen Mikropumpenantrieb zur Verwendung in einer Mikropumpe gemäß der vorliegenden Erfindung;

Fig. 5         einen piezoelektrischen Mikropumpenantrieb zur Verwendung in einer Mikropumpe gemäß der vorliegenden Erfindung;

Fig. 6         schematische Querschnittdarstellungen zur Erläuterung eines ersten Ausführungsbeispiels des erfindungsgemäßen Verfahrens;

Fig. 7         schematische Querschnittdarstellungen zur Erläuterung eines zweiten Ausführungsbeispiels des erfindungsgemäßen Verfahrens; und

Fig. 8         schematische Querschnittdarstellungen zur Erläuterung eines dritten Ausführungsbeispiels des erfindungsgemäßen Verfahrens.

Im folgenden werden zunächst Entwurfskriterien für eine blasentolerante Mikropumpe erläutert, die die Grundlage der vorliegenden Erfindung darstellen.

Eine entscheidende Rolle für die Blasentoleranz und die Möglichkeit einer Selbstbefüllbarkeit spielt das Kompressionsverhältnis $\varepsilon := \Delta V : V_0$. Dabei stellt das Volumen $\Delta V$ das Volumen dar, welches durch die Mikromembran in einem Zyklus verdrängt wird, das sogenannte Hubvolumen. Das Volumen $V_0$, das auch als Totvolumen bezeichnet wird, stellt das Pumpkammervolumen bei entspannter Membran dar. Durch den kleinen Hub von Mikroaktoren sowie ein durch technologische Randbedingungen vorgegebenes Totvolumen ist das Kompressionsverhältnis bei Mikropumpen allgemein klein.

Über die Zustandsgleichung des geförderten Mediums können bei einem bekannten Kompressionsverhältnis die Druckspitzen berechnet werden. Wird ein kritischer Druck von $\Delta p_{crit}$ zum Öffnen eines Ventils angenommen, ergibt sich daraus ein Kriterium für das minimal notwendige Kompressionsverhältnis. Im Falle einer mit Wasser befüllten Pumpkammer kann dieses Kompressionsverhältnis sehr klein sein, da Wasser nahezu inkompressibel ist. Befindet sich jedoch eine Luftblase in der Pumpkammer, so muß für diese Blase die Zustandsgleichung von Gasen verwendet werden. Luft ist sehr viel kompressibler als Wasser, weshalb das notwendige Kompressionsverhältnis stark ansteigt. Im schlimmsten Fall (worst case) füllt die Luftblase die gesamte Pumpkammer aus, wobei das Kriterium für das notwendige Kompressionsverhältnis einer blasentoleranten Pumpe dann wie folgt lautet:

$$\varepsilon \geq \left( \frac{p_0}{p_0 - |\Delta p_{crit}|} \right)^{\frac{1}{\gamma}} - 1$$

Dabei ist $p_0$ der Atmosphärendruck und $\gamma$ der Adiabatenkoeffizient.

Zur Ermittlung dieses notwendigen Kompressionsverhältnisses wurde der kritische Druck $\Delta p_{crit}$ bei dem passiven Mikroventil der Mikropumpe gemessen. Bei diesen Messungen trat die große Bedeutung der Oberflächenspannungen und der Adhäsionskräfte in der Mikrofluidik zutage. Bei vollständig befüllten oder bei trockenen Ventilen wurde ein kritischer Druck von nur etwa $\Delta p_{crit} = 10$ hPa gemessen. Dagegen wurde bei Ventilen, deren Auflagestruktur schon mit Wasser benetzt war, der siebenfache kritische Druck von $\Delta p_{crit} = 70$ hPa gemessen.

Maßgebend für dieses höhere Kriterium bei der mit Wasser benetzten Auflagestruktur ist der höhere Druck, da nicht ausgeschlossen werden kann, daß sich die Luftblase am Ventil befindet. Das Kompressionsverhältnis muß bei den vorliegenden passiven Mikroventilen mit $\Delta p_{crit} = 70$ hPa unter der Annahme isothermer Zustandsänderungen, d.h. $\gamma = 1$, der Bedingung $\varepsilon \geq 0{,}075$ genügen. Mit anderen Worten heißt das, daß das Totvolumen höchstens um den Faktor 13,333 größer sein darf als das Hubvolumen.

Bei einem herkömmlichen Design elektrostatisch betriebener Mikromembranpumpen beträgt das Hubvolumen etwa 50nl = 0,05μl, während das Totvolumen 28μl beträgt. Das Kompressionsverhältnis beträgt demnach $\varepsilon = 0{,}0018$ oder 1 : 550 und ist somit viel zu gering.

Zur Erhöhung des Kompressionsverhältnisses kommen vordringlich zwei Maßnahmen in Betracht. Zum einen eine Vergrößerung des Hubvolumens ΔV und zum anderen eine Verringerung des Totvolumens $V_0$.

Für den Fall einer elektrostatisch betriebenen Mikromembranpumpe ist das Hubvolumen durch ihren Aufbau festgelegt und kann nicht ohne weiteres vergrößert werden. Somit kann eine Erhöhung des Kompressionsverhältnisses bei festgelegten lateralen Abmessungen nur durch eine Minimierung des Totvolumens erreicht werden.

Dagegen kann bei einem piezoelektrischen Antrieb durch die geeignete Wahl der Antriebsparameter, d.h. des Verhältnisses von Dicke der Keramik zur Dicke der Membran und der lateralen Abmessungen der Keramik, das Hubvolumen im Vergleich zum elektrostatischen Antrieb auf mehr als das Doppelte, d.h. typischerweise 100 nl, bei gleichen lateralen Abmessungen von 7mm x 7mm erhöht werden. Dadurch verbessert sich das Kompressionsverhältnis um den Faktor 2.

Die vorliegende Erfindung zielt nun bei bevorzugten Ausführungsbeispielen auf eine Reduzierung des Totvolumens, das von der Antriebseinheit und von der Ventileinheit gebildet wird, ab. Entsprechende Maßnahmen, die eine solche Reduzierung des Totvolumens ermöglichen, werden im folgenden beschrieben.

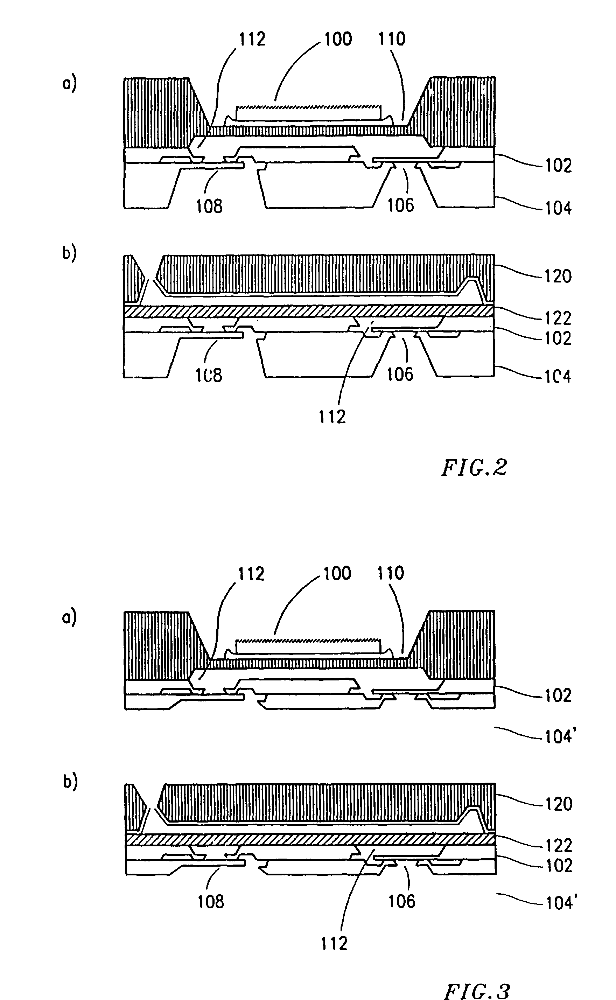

In den Fig. 2a), 2b), 3a) sowie 3b) sind Ausführungsbeispiele einer erfindungsgemäßen Mikromembranpumpe dargestellt.

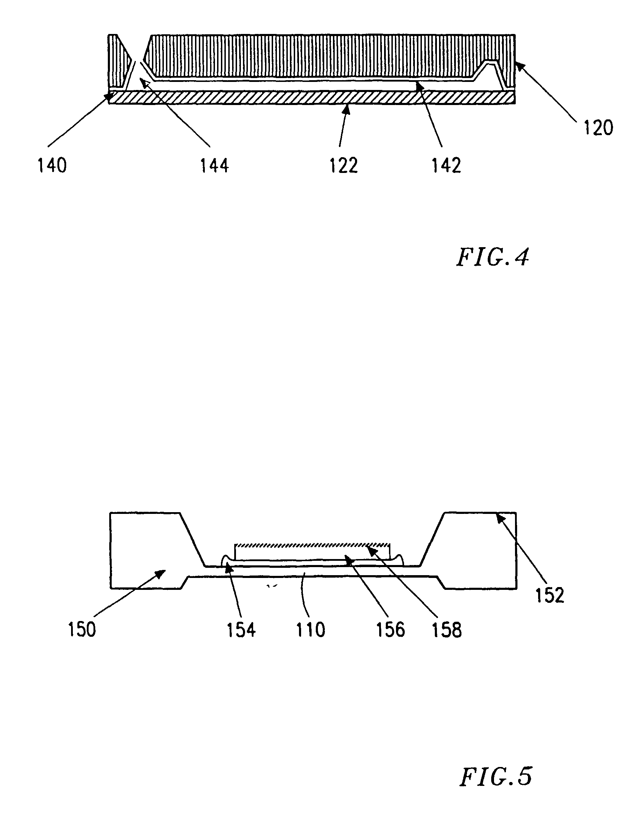

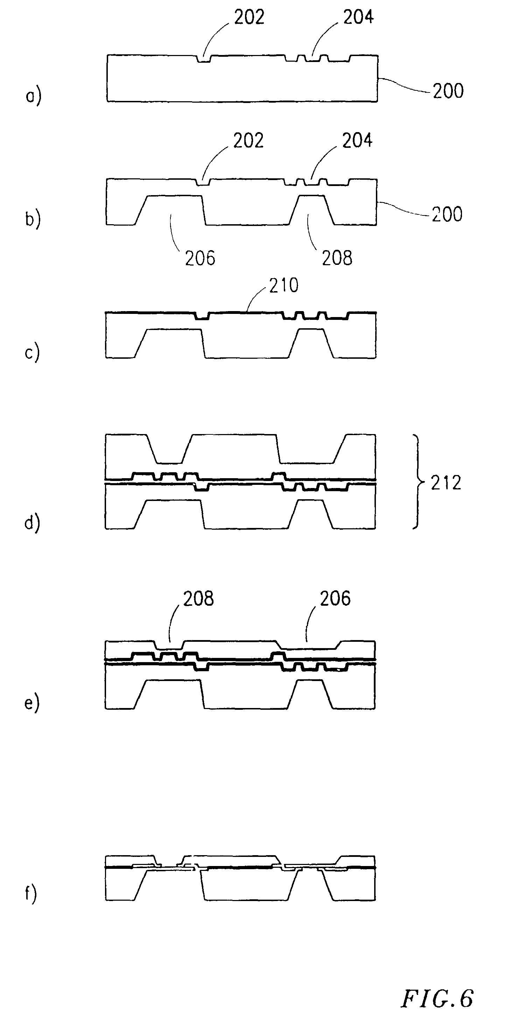

Fig. 2a) zeigt eine erfindungsgemäße Mikromembranpumpe auf der Basis eines piezoelektrischen Aktors 100. Der verwendete piezoelektrische Aktor wird nachfolgend bezugnehmend auf Fig. 5 näher erläutert. Ein Pumpenkörper ist durch zwei Halbleiterscheiben, vorzugsweise Siliziumwafer, 102 und 104 gebildet. In den Halbleiterscheiben 102 und 104 sind ein Einlaßventil 106 und ein Auslaßventil 108 mittels mikromechanischer Verfahren gebildet. Vorteilhafte Verfahren zum Bilden einer solchen Struktur werden später bezugnehmend auf die Fig. 6 - 8 beschrieben. Eine zwischen dem Pumpenkörper und einer Mikromembran 110 gebildete Pumpkammer 112 weist im entspannten Zustand der Mikromembran 110 gemäß der vorliegenden Erfindung ein Volumen auf, das höchstens um den Faktor 13,333 größer ist als das Hubvolumen, das durch das Antreiben der Membran 110 mittels des piezoelektrischen Antriebs 100 erzeugt wird. Wie in Fig. 2a) zu sehen ist, ist dazu das Siliziumsubstrat 102 auf der der Mikromembran zugewandten Oberfläche gedünnt, um die Realisierung eines derart kleinen Pumpkammervolumens zu ermöglichen.

In Fig. 2b) ist ein Ausführungsbeispiel einer Mikromembranpumpe gemäß der vorliegenden Erfindung auf der Basis eines elektrostatischen Antriebs dargestellt. Der elektrostatische Antrieb besteht aus einer Gegenelektrode 120 und einem elektrostatischem Aktor 122, der als Mikromembran dient. Dieser elektrostatische Antrieb wird nachfolgend bezugnehmend auf Fig. 4 näher erläutert.

Ein Pumpenkörper ist wiederum durch zwei Siliziumsubstrate 102 und 104, in denen passive Rückschlagventile 106 und 108 gebildet sind, realisiert. Wie in Fig. 2b) zu sehen ist, ist der elektrostatische Aktor 122, der gleichzeitig als Mikromembran dient, im wesentlichen planar, so daß derselbe in den Bereichen außerhalb der Einlaßöffnung bzw. der Auslaßöffnung, in denen die Rückschlagventile 106 und 108 gebildet sind, auf dem Pumpenkörper aufliegt. Dadurch kann bei dem elektrostatischen Antrieb ein Kompressionsverhältnis, das die erfindungsgemäße Größe aufweist, erhalten werden.

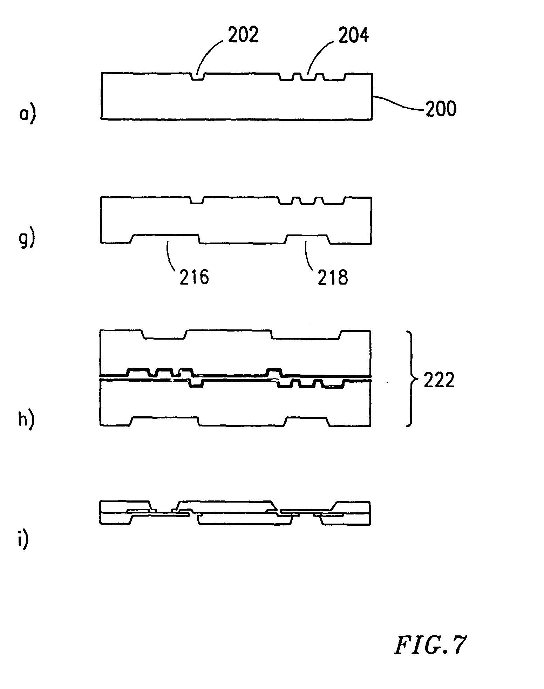

In den Fig. 3a) und 3b) sind zwei weitere Ausführungsbeispiele gemäß der vorliegenden Erfindung dargestellt, die sich von den in Fig. 2a) und 2b) dargestellten Ausführungsbeispielen ausschließlich hinsichtlich des zweiten, den Pumpenkörper definierenden Siliziumsubstrats unterscheiden. Bei den in den Fig. 3a) und 3b) dargestellten Ausführungsbeispielen ist auch das zweite Siliziumsubstrat 104', das zusammen mit dem Siliziumsubstrat 102 den Pumpkörper bildet, gedünnt, und zwar auf der von der Mikromembran 122 abgewandten Seite. Ein derartiger Pumpenkörper, wie er in den Fig. 3a) und 3b) dargestellt ist, ergibt sich durch ein Herstellungsverfahren, wie es nachfolgend bezugnehmend auf Fig. 7 erläutert wird.

Fig. 4 zeigt einen planaren elektrostatischen Mikropumpenantrieb, wie er bei der vorliegenden Erfindung verwendet werden kann. Der elektrostatische Antrieb unterscheidet sich von dem in Fig. 1 dargestellten Antrieb im wesentlichen durch einen planaren Aktor, der aus einer starren Gegenelektrode 120 und einer ganzflächig dünnen Membran 122 besteht. Somit ist der Anteil des Pumpkammervolumens, der von der Antriebseinheit gebildet wird, auf ein Nullvolumen reduziert, wie in Fig. 2b) zu sehen ist, wodurch sich ein wesentlicher Beitrag zur Kompressionserhöhung ergibt.

Der beschriebene planare elektrostatische Aktor kann beispielsweise mit dem nachfolgend beschriebenen Verfahren hergestellt werden. Zunächst werden Ausgangswafer für die Gegenelektrode 120 und die Pumpmembran 122 hergestellt. Dies beinhaltet insbesondere die Schaffung einer Möglichkeit zur elektrischen Kontaktierung, beispielsweise das Aufbringen von Bondpads, sowie bei elektrisch nicht leitenden Ausgangsmaterialien die Herstellung einer geeignet strukturierten leitfähigen Beschichtung zur Realisierung der Elektrodenflächen, wiederum mit der Möglichkeit der elektrischen Kontaktierung. Nachfolgend wird eine Abstandsschicht 140 an der späteren Montagefläche von Pumpmembran 122 und Gegenelektrode 120 gebildet. Ferner werden Isolationsschichten 142 an allen Berührungsstellen der beiden Wafer gebildet, um einen elektrischen Kurzschluß zwischen den Elektroden zu verhindern. An der Abstandsschicht 140 erfolgt eine strukturierte Verbindung der beiden Ausgangswafer. Im Anschluß wird der Ausgangswafer für die Pumpmembran 122 ganzflächig abgetragen, bis die gewünschte Enddicke der Pumpmembran erreicht ist.

Als Abtragungsverfahren zur Herstellung der flexiblen elektrostatisch angetriebenen Pumpmembran 122 können je nach gewähltem Material ein mechanischer Abtrag, beispielsweise durch Schleifen, oder ein Ätzen verwendet werden. Zur Unterstützung von Ätzprozessen kann die Pumpmembran 122 an ihrer Oberseite als Mehrschichtstruktur ausgeführt sein, die als unterste Lage eine Ätzstopschicht an der späteren Membranunterseite aufweist. Die Herstellung der Pumpmembran erfordert keinen Strukturierungsprozeß, so daß durch einen solchen im wesentlichen planaren elektrostatischen Mikropumpenantrieb neben der Optimierung des Kompressionsverhältnisses eine Minimierung der Herstellungskosten erreicht werden kann.

Eine weitergehende Strukturierung der Unterseite der Pumpmembran, beispielsweise die Herstellung von zusätzlichen Hilfsstrukturen wie Abstandhaltern oder Strömungskanälen, oder das nachträglich Entfernen oder Aufbringen von Beschichtungen kann im Anschluß an das ganzflächige Abtragen erfolgen. Zu dieser weitergehenden Strukturierung gehört beispielsweise das Aufbringen von zusätzlichen Schichten zur Erhöhung der chemischen Beständigkeit, zur elektrischen Isolation oder zur gezielten Einstellung mechanischer Eigenschaften, beispielsweise einer lokal unterschiedlichen Membrandicke zur Erzielung einer lokal inhomogenen Elastizität.

Als Ausgangsmaterialien für die Gegenelektrode 120 und für die Pumpmembran 122 können insbesondere Silizium, Glas oder Kunststoffe verwendet werden. Die Abstandsschicht 140 kann in beliebiger Kombination durch eine Strukturierung oder durch ein additives Aufbringen an einem oder an beiden Ausgangswafern erzeugt werden. Als Verfahren zum Verbinden der Gegenelektrode 120 mit der Pumpmembran können je nach verwendeten Ausgangsmaterialien beispielsweise Kleben bei beliebigen Materialien, anodisches Bonden bei Silizium-Glas-oder Silizium-Silizium-Verbindungen mit Glas-Abstandsschicht, oder ein Silicon-Fusion-Bonden bei einer SiliziumSilizium-Verbindung eingesetzt werden. Um ein Verbindungsverfahren zu ermöglichen, bei dem eine Temperaturerhöhung notwendig ist, beispielsweise bei einem anodischen Bonden, werden bei dem elektrostatischen Aktor in der Gegenelektrode 120 Öffnungen 144 angebracht, die bei temperaturbedingter Ausdehnung und Kompression des Gasvolumens zwischen Pumpmembran 122 und Gegenelektrode 120 einen Druckausgleich zur Umgebung ermöglichen. In gleicher Weise können diese Öffnungen in der Abstandsschicht 140 angeordnet sein.

Ein piezoelektrischer Aktor zur Verwendung bei einer Mikromembranpumpe gemäß der vorliegenden Erfindung ist in Fig. 5 dargestellt. Eine Pumpmembran 110 weist Befestigungsstrukturen 150 zur Anbringung der Membran 110 an einem Pumpenkörper auf. Die Befestigungsstrukturen und die Membran sind auf der von dem Pumpenkörper abgewandten Seite mit einer elektrisch leitenden Schicht 152 überzogen. Mittels einer Verbindungsschicht 154 ist ein piezoaktives Material 156 an der Membran 110 angebracht. Das piezoaktive Material 156 ist ebenfalls mit einer leitfähigen Schicht 158 überzogen. Zur Isolation der Pumpkammer kann unterhalb der leitfähigen Schicht 152 eine Isolationsschicht vorgesehen sein.

Im folgenden werden kurz Verfahren zur Herstellung des piezoelektrischen Aktors beschrieben. Zunächst wird die dünne Pumpmembran 110 gebildet, wobei innerhalb der Pumpkammer Strukturen vorgesehen werden müssen, die später eine optimale Strömung zwischen Einlaßventil und Auslaßventil gewährleisten. Die Unterseite der Pumpmembran kann ferner weitergehend strukturiert werden, beispielsweise durch die Herstellung zusätzlicher Hilfstrukturen in der Form von Abstandhaltern und Strömungskanälen. Ferner können nachträglich Beschichtungen aufgebracht oder entfernt werden. Wiederum gehört dazu das Aufbringen von zusätzlichen Schichten zur Erhöhung der chemischen Beständigkeit, zur elektrischen Isolation oder zur gezielten Einstellung mechanischer Eigenschaften, beispielsweise einer lokal unterschiedlichen Membrandicke zur Erzielung einer lokal inhomogenen Elastizität.

Im Anschluß wird die Pumpmembran 110 mit einem piezoelektrischen Material 156 verbunden. Das piezoelektrische Material kann in der Form eines Kristalls vorliegen oder alternativ in der Form einer dünnen Schicht 156 direkt auf die Pumpmembran 110 aufgebracht werden. Beide Seiten des Piezomaterials müssen dabei elektrisch kontaktierbar sein, wobei eine nichtleitende Schicht 154 als Verbindung zwischen Piezounterseite und elektrisch leitender Pumpmembran 110, z.B. eine Klebeschicht, zugelassen werden kann, da für die Umsetzung des Piezoeffekts ein elektrisches Feld entscheidend ist.

Werden zur Herstellung des piezoelektrischen Antriebs ebenfalls Verbindungsverfahren, die eine Temperaturerhöhung notwendig machen, eingesetzt, muß das Piezomaterial 156 nach diesen Verfahren unter Umständen wieder nachpolarisiert werden. Dabei muß eine hohe elektrische Spannung an den Kristall angelegt werden, wobei das Material eine Temperatur haben sollte, die ungefähr der Curietemperatur des Aktormaterials entspricht, typischerweise 180°C-350°C.

Zum Bilden der erfindungsgemäßen Mikromembranpumpe werden die bezugnehmend auf die Fig. 4 und 5 beschriebenen Aktorvorrichtungen auf einem Pumpenkörper angebracht, wodurch eine Mikromembranpumpe, die vorher bezugnehmend auf die Fig. 2 und 3 beschrieben wurde, erzeugt wird.

Im folgenden werden nun Verfahren zur Herstellung eines Pumpenkörpers, der für die erfindungsgemäße Mikromembranpumpe geeignet ist, beschrieben.

Vorzugsweise wird als Ausgangsmaterial der Ventileinheit Silizium verwendet, das die Eigenschaften der Ventilklappen ganz wesentlich beeinflußt. Die erfindungsgemäße Herstellung des Pumpenkörpers zusammen mit der Ventileinheit zielt wie die oben beschriebene planare Antriebseinheit ebenfalls auf ein möglichst geringes Pumpkammervolumen ab. Dies gilt insbesondere für den innenliegenden Ventilchip, der zum Pumpkammervolumen beiträgt.

Eine Möglichkeit zur Reduzierung des Pumpkammervolumens besteht in einem Dünnen dieses Ventilchips. Jedoch ist gerade das Dünnen derartiger Ventilchips mit ganz erheblichen Problemen verbunden. Zum einen führt ein mechanisches Dünnen, beispielsweise ein Schleifen oder Polieren, aufgrund der dabei auftretenden starken Vibrationen u. U. zur Beschädigung der Klappe, d.h. die Ventilklappe kann an ihrem Einspannpunkt abbrechen. Ferner scheidet ein chemischer Prozeß zum Abdünnen des Ventilchips ebenfalls aus, da die bestehenden Ventilklappen gegenüber dem chemischen Abtrag geschützt werden müssen, was prozeßtechnisch nur mit sehr hohem Aufwand möglich ist.

Erfindungsgemäß trägt ein zweistufiger Prozeß zur Lösung der oben genannten Problematik bei. Im folgenden werden nun unterschiedliche Ausführungsbeispiele von Verfahren beschrieben, die das Dünnen der der Antriebseinheit einer Mikropumpe zugeordnete Oberfläche eines Ventilchips ohne Beschädigung der Ventilklappen bzw. ohne hohen prozeßtechnischen Aufwand ermöglichen.

Ein erstes Verfahren wird nun bezugnehmend auf Fig. 6 beschrieben. Der Ventilkörper mit der integrierten Ventilstruktur wird dabei aus zwei Halbleiterplatten, vorzugsweise Siliziumplatten, gebildet, die zunächst in den Schritten a) - c) einer gleichartigen Behandlung unterworfen werden.

Zunächst werden die Ventilchips 200 auf ihrer Vorderseite, d.h. auf einer Hauptoberfläche desselben, beispielsweise durch ein Ätzverfahren vorstrukturiert, um eine Ventilklappenstruktur 202 und eine Ventilsitzstruktur 204 festzulegen. Diese Vorstrukturierung ist in einem Schritt a) in Fig. 6 dargestellt. In einem nächsten Schritt werden beispielsweise durch naßchemische Ätzverfahren bei dem dargestellten Ausführungsbeispiel des erfindungsgemäßen Verfahrens Ventilklappenwannen 206 und Ventilöffnungswannen 208 von der Rückseite der Chips her in einer vorbestimmten Beziehung zu den Ventilklappenstrukturen 202 und den Ventilsitzstrukturen 204 gebildet, siehe Schritt b). Nachfolgend werden die Ventilchips 200 bei diesem Ausführungsbeispiel auf der Oberseite mit einer Oxidschicht 210 überzogen, Schritt c).

Im Anschluß werden die beiden Chips beispielsweise durch anodische Bondverfahren oder durch ein Silicon-Fusion-Bonden an den mit der Oxidschicht überzogenen Oberflächen derselben verbunden, siehe Schritt d). Die beiden Chips sind dabei derart angeordnet, daß die Ventilsitzstrukturen des einen Chips mit den Ventilklappenstrukturen des anderen Chips ausgerichtet sind und umgekehrt. Dies führt zu einer Verbindung der Ventilklappen mit dem Ventilsitz und somit zu einer mechanischen Stabilisierung, der beim nachfolgenden Dünnungsprozeß von Bedeutung ist.

Das nach dem Schritt d) erhaltene Waferpaar 212 wird anschließend einseitig gedünnt, siehe oberen Wafer in Schritt e), wodurch die Ventilwannen 206, 208 des gedünnten Wafers möglichst flach herausgebildet werden sollen. Nachfolgend wird ein abschließender naßchemischer Ätzprozeß durchgeführt, der zum Freilegen der Klappenstrukturen bzw. zum Öffnen der Ventilsitze führt, siehe Schritt f). Somit ist das erfindungsgemäße Verfahren zur Herstellung des erfindungsgemäßen Pumpenkörpers mit integrierter Ventilstruktur abgeschlossen.

Bezugnehmend auf Fig. 7 wird nachfolgend ein alternatives Verfahren beschrieben. Zunächst werden wie im Schritt a) in Fig. 6 in einer Hauptoberfläche der Ventilchips 200 Ventilsitzstrukturen 204 und Ventilklappenstrukturen 202 definiert. Nachfolgend werden in einem Schritt g) auf der Rückseite der Chips Ventilklappenwannen 216 und Ventilöffnungswannen 218 erzeugt. Die Wannen weisen bei diesem Ausführungsbeispiel eine Wannentiefe auf, die der Wannentiefe des fertiggestellten Pumpenchips entspricht. Nach dieser Strukturierung werden die Ventilwafer wiederum verbunden, so daß eine Ventileinheit 222 gebildet wird, siehe Schritt h). Der wesentliche Unterschied zu dem bezugnehmend auf Fig. 6 beschriebenen Verfahren besteht in dem letzten Schritt, wobei das Abdünnen der Wafer bei dem in Fig. 7 dargestellten Verfahren nicht einseitig mechanisch erfolgt, sondern in einem Schritt i) beidseitig durch chemische Verfahren. Der chemische Ätzprozeß wird solange angewendet, bis die Klappen bzw. Ventilöffnungen freigelegt sind. Das Ergebnis ist ein Waferpaar, das aus zwei Wafern der gleichen Dicke besteht.

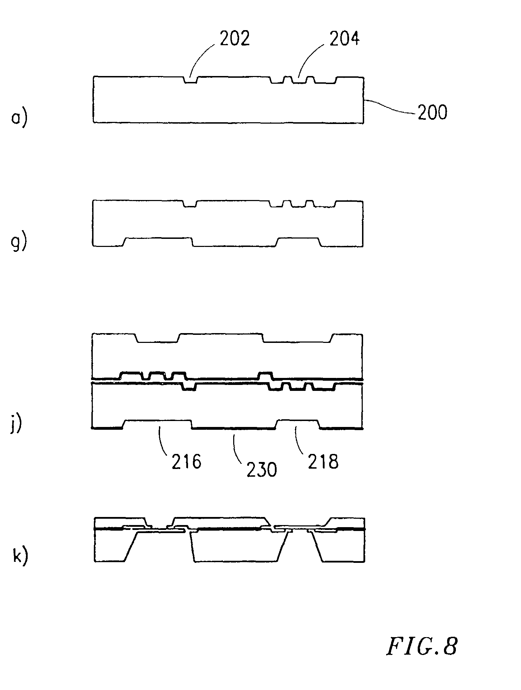

Ein weiteres alternatives Verfahren gemäß der vorliegenden Erfindung wird nachfolgend bezugnehmend auf Fig. 8 erläutert. Die in Fig. 8 dargestellten Schritte a) und g) entsprechen den in der Fig. 7 dargestellten Schritten a) und g). Anschließend werden die Ventilchips wiederum zu einer Ventileinheit verbunden, wie in einem Schritt j) dargestellt ist, wobei der Einlaß und der Auslaß in diesem Stadium noch geschlossen sind. Jedoch wird nun auf die Oberfläche des unteren Chips mit Ausnahme der strukturierten Wannen 216 und 218 eine Ätzmaske 230 aufgebracht. Somit wird in einem folgenden naßchemischen Ätzverfahren nur der obere Chip gedünnt, während nicht der gesamte untere Chip mitgedünnt wird, da die Maske 230 das Ätzen des gesamten Chips verhindert, so daß der untere Chip nur in den vorstrukturierten Wannen 216 und 218 geätzt wird und nach Fertigstellung der Struktur die ursprüngliche Dicke aufweist, siehe Schritt k). Man erhält somit ein Waferpaket, das nach dem Freilegen der Klappen eine zur Pumpkammer gerichtete planare Ventileinheit beinhaltet, wenn die Pumpkammer durch den Pumpkörper und eine auf dem oberen Chip angebrachte Mikromembran gebildet wird.

Nach der Herstellung der Antriebseinheit sowie der Ventileinheit, wie oben beschrieben wurde, müssen beide Einheiten miteinander verbunden werden. Eine kostengünstige und zugleich reproduzierbare Verbindungstechnik kann jedoch nur dann realisiert werden, wenn die Montage auf Wafer-Ebene stattfindet. Für diese Verbindung bietet sich wieder eine Vielzahl von Techniken und Verfahren an, beispielsweise Kleben, Silicon-Fusion-Bonden, anodisches Bonden und eutektisches Bonden. Hochtemperaturverfahren können wiederum mit einer Depolarisation des Piezomaterials verbunden sein und somit ein nachträgliches Polarisieren des Piezoaktors erfordern.

Nach dem Verbinden der Antriebseinheit mit dem Ventilkörper erhält man die in den Fig. 2 und 3 dargestellten Mikromembranpumpen, wobei die beschriebenen Verfahren zur Herstellung des Pumpenkörpers sowie die beschriebenen Antriebsvorrichtungen das hohe Kompressionsverhältnis gemäß der vorliegenden Erfindung ermöglichen.

Die vorliegende Erfindung schafft somit zum einen selbstansaugende und blasentolerante Mikromembranpumpen, die zur Förderung kompressibler Medien geeignet sind. Ferner schafft die vorliegende Erfindung Verfahren, die zur Herstellung des Pumpenkörpers mit integrierter Ventileinheit einer derartigen selbstansaugenden Mikromembranpumpe gemäß der vorliegenden Erfindung verwendet werden können.

## Patentansprüche

1. Mikromembranpumpe mit folgenden Merkmalen:

    einer Pumpmembran (110; 122), die mittels einer Antriebseinrichtung (100; 120) in eine erste und eine zweite Stellung bewegbar ist; und

    einem Pumpenkörper (102; 104; 104'), der mit der Pumpmembran (110; 122) verbunden ist, um eine Pumpkammer (112) zwischen denselben festzulegen;

    wobei der Pumpenkörper (102; 104; 104') aus zwei Halbleiterscheiben gebildet ist, in denen einstückig mit denselben jeweils ein Ventilsitz und eine Ventilklappe gebildet sind, wobei die beiden Halbleiterscheiben derart verbunden sind, daß jeweils durch einen Ventilsitz der einen Halbleiterscheibe und eine Ventilklappe der anderen Halbleiterscheibe ein passives Rückschlagventil (106, 108) gebildet ist, wobei eines (106) der passiven Rückschlagventile (106, 108) in einer die beiden Halbleiterscheiben durchdringenden Einlaßöffnung angeordnet ist, während das andere (108) der Rückschlagventile (106, 108) in einer die beiden Halbleiterscheiben durchdringenden Auslaßöffnung angeordnet ist;

wobei die Pumpmembran (110; 122) bei der Bewegung aus der ersten in die zweite Stellung das Volumen ($V_0$) der Pumpkammer im wesentlichen um ein Hubvolumen ($\Delta V$) vergrößert und bei der Bewegung aus der zweiten in die erste Stellung das Volumen der Pumpkammer (112) im wesentlichen um ein Hubvolumen ($\Delta V$) verringert,

dadurch gekennzeichnet, daß
das Verhältnis ε des Hubvolumens ($\Delta V$) zu dem Volumen ($V_0$) der Pumpkammer (112), wenn die Pumpmembran (110; 122) in der ersten Stellung ist, folgender Gleichung genügt:

$$\varepsilon \geq \left( \frac{p_0}{p_0 - |\Delta p_{crit}|} \right)^{\frac{1}{\gamma}} - 1$$

wobei $p_0$ der Atmosphärendruck ist, $\gamma$ der Adiabatenkoeffizient ist, und $\Delta p_{crit}$ der maximale von der Ventilgeometrie und der Ventilbenetzung abhängige Druckwert, der nötig ist, um die Ventile zu öffnen, ist.

2. Mikromembranpumpe gemäß Anspruch 1, dadurch gekennzeichnet, daß das Verhältnis e zumindest 0,075 beträgt.

3. Mikromembranpumpe gemäß Anspruch 1 oder 2, dadurch gekennzeichnet, daß die Antriebseinrichtung (120) eine elektrostatische Antriebseinrichtung ist, deren elektrostatischer Aktor durch die Pumpmembran (122) und eine Gegenelektrode (120) gebildet ist, wobei die Pumpmembran (122) im wesentlichen planar ausgebildet ist, derart, daß sie in der ersten Endstellung außerhalb der Einlaßöffnung und der Auslaßöffnung an dem Pumpenkörper (102) anliegt.

4. Mikromembranpumpe gemäß Anspruch 1 oder 2, dadurch gekennzeichnet, daß die Antriebseinrichtung eine piezoelektrische Antriebseinrichtung (100) ist.

5. Mikromembranpumpe gemäß einem der Ansprüche 1 - 4, bei der der Pumpenkörper durch zwei an Hauptoberflächen derselben verbundene Halbleiterplatten (102, 104; 104') gebildet ist, wobei das Einlaß- und das Auslaß-Ventil (106, 108) jeweils durch in die Halbleiterscheiben (102, 104; 104') geätzte Ventilsitze und Ventilklappen gebildet sind, die in Ventilwannen, die die Einlaßöffnung und die Auslaßöffnung definieren, angeordnet sind.

6. Mikromembranpumpe gemäß Anspruch 5, bei der die der Pumpmembran (110; 122) zugewandte Halbleiterplatte (102) gedünnt ist, um eine flache Ventilwanne zwischen der der Pumpmembran zugewandten Oberfläche der Halbleiterplatte (102) und dem Einlaß- und Auslaß-Ventil zu definieren.

7. Mikromembranpumpe gemäß Anspruch 5 oder 6, bei der die Halbleiterplatten (102, 104; 104') aus Silizium gebildet sind.

8. Verfahren zum Herstellen des Pumpenkörpers für eine Mikromembranpumpe gemäß einem der Ansprüche 1 - 7, mit folgenden Schritten:

   8.1 Strukturieren jeweils einer ersten Hauptoberfläche einer ersten und zweiten Halbleiterscheibe (200) zur Festlegung einer Ventilklappenstruktur (202) des Einlaßventils und einer Ventilsitzstruktur (204) des Auslaßventils in der ersten Scheibe und einer Ventilklappenstruktur des Auslaßventils und einer Ventilsitzstruktur des Einlaßventils in der zweiten Scheibe;

   8.2 Bilden jeweils einer Ventilklappenwannenstruktur (206; 216) und einer Ventilöffnungswannenstruktur (208; 218) in einer vorbestimmten Beziehung zu den Ventilklappenstrukturen (202) und den Ventilsitzstrukturen (204) in jeweils einer zweiten Hauptoberfläche der ersten und der zweiten Halbleiterscheibe;

   8.3 Verbinden der ersten Hauptoberflächen der ersten und der zweiten Halbleiterscheibe, derart, daß jeweils eine Ventilklappenstruktur zu einer Ventilsitzstruktur eine vorbestimmte Beziehung aufweist;

   8.4 Dünnen zumindest einer der Halbleiterscheiben von der zweiten Hauptoberfläche her; und

   8.5 Ätzen der jeweils zweiten Hauptoberfläche der ersten und der zweiten Halbleiterscheibe zumindest im Bereich der Ventilklappenwannenstruktur und der Ventilöffnungswannenstruktur zum Freilegen der Ventilklappen und zum Öffnen der Ventilsitze.

9. Verfahren gemäß Anspruch 8, bei dem im Schritt 8.4 beide Halbleiterscheiben von der zweiten Hauptoberfläche her gedünnt werden.

10. Verfahren gemäß Anspruch 8 oder 9, das vor dem Schritt 8.4 ferner den Schritt des Aufbringens einer Oxidschicht (210) jeweils auf die ersten Hauptoberflächen der ersten und der zweiten Halbleiterscheibe aufweist.

## Claims

1. A micromembrane pump comprising:

   a pump membrane (110; 122) which is adapted to be moved to a first and a second position with the aid of a drive means (100; 120); and

   a pump body (102; 104; 104') connected to said pump membrane (110; 122) so as to define a pump chamber (112) between these two components,

   said pump body (102; 104; 104') being defined by two semiconductor plates having each formed therein a valve seat and a valve flap which are formed integrally with the respective semiconductor plate, the two semiconductor plates being connected in such a way that a respective passive non-return valve (106, 108) is defined by a valve seat of one semiconductor plate and by a valve flap of the other semiconductor plate, one (106) of said passive non-return valves (106, 108) being arranged in an inlet opening penetrating both semiconductor plates, whereas the other (108) of said non-return valves (106, 108) is arranged in an outlet opening penetrating both semiconductor plates,

   said pump membrane (110; 122) increasing the volume ($V_0$) of the pump chamber substantially by a stroke volume ($\Delta V$) when moving from the first to the second position and reducing the volume of the pump chamber (112) substantially by a stroke volume ($\Delta V$) when moving from the second to the first position,

   characterized in that,
   when the pump membrane (110; 122) is at the first position, the ratio $\varepsilon$ of the stroke volume ($\Delta V$) to the volume ($V_0$) of the pump chamber (112) satisfies the following equation:

   $$\varepsilon \geq \left( \frac{p_0}{p_0 - |\Delta p_{crit}|} \right)^{\frac{1}{\gamma}} - 1$$

   wherein $p_0$ is the atmospheric pressure, $\gamma$ the adiabatic coefficient, and $\Delta p_{crit}$ the maximum pressure value which depends on the valve geometry and on the wetting of the valves and which is required for opening the valves.

2. A micromembrane pump according to claim 1, characterized in that the ratio $\varepsilon$ is at least 0.075.

3. A micromembrane pump according to claim 1 or 2, characterized in that the drive means (120) is an electrostatic drive means whose electrostatic actor is defined by the pump membrane (122) and a counterelectrode (120), the pump membrane (122) having a substantially planar structural design of such a nature that it abuts on the pump body (102) at a first end position outside the inlet opening and the outlet opening.

4. A micromembrane pump according to claim 1 or 2, characterized in that the drive means is a piezoelectric drive means (100).

5. A micromembrane pump according to one of the claims 1 to 4, wherein the pump body is defined by two semiconductor plates (102, 104; 104') which are connected at the main surfaces thereof, the inlet and the outlet valve (106, 108) being each defined by valve seats and valve flaps etched in said semiconductor plates (102, 104; 104') and arranged in valve wells defining the inlet opening and the outlet opening.

6. A micromembrane pump according to claim 5, wherein the semiconductor plate (102) facing the pump membrane (110; 122) is thinned so as to define a shallow valve well between the semiconductor-plate surface facing the pump membrane and the inlet and outlet valves.

7. A micromembrane pump according to claim 5 or 6, wherein the semiconductor plates (102, 104; 104') are formed from silicon.

8. A method of producing the pump body for a micromembrane pump according to one of the claims 1 to 7, comprising the following steps:

   8.1 structuring a respective first main surface of a first and of a second semiconductor plate (200) for defining a valve flap structure (202) of the inlet valve and a valve seat structure (204) of the outlet valve in the first disc and a valve flap structure of the outlet valve and a valve seat structure of the inlet valve in the second disc;

   8.2 forming a valve flap well structure (206; 216) and a valve opening well structure (208; 218) in a predetermined relationship with the valve flap structures (202) and the valve seat structures (204) in a respective second main surface of the first and of the second semiconductor plate;

8.3 connecting the first main surfaces of said first and second semiconductor plates in such a way that the respective valve flap structure is arranged in a predetermined relationship with a respective valve seat structure;

8.4 thinning at least one of the semiconductor plates starting from the second main surface; and

8.5 etching the respective second main surface of said first and of said second semiconductor plate at least in the area of the valve flap well structure and of the valve opening well structure so as to expose the valve flaps and open the valve seats.

9. A method according to claim 8, wherein, in step 8.4, both semiconductor plates are thinned starting from the second main surfac.

10. A method according to claim 8 or 9, comprising prior to step 8.4 the additional step of applying an oxide layer (210) to the respective first main surface of said first and of said second semiconductor plate.

## Revendications

1. Pompe à micromembrane aux caractéristiques suivantes :

une membrane de pompe (110; 122) pouvant être déplacée, à l'aide d'un dispositif d'entraînement (100 ; 120), en une première et une seconde position ; et
un corps de pompe (102; 104 ; 104') assemblé avec la membrane de pompe (110; 122), afin de déterminer une chambre de pompage entre eux ;
le corps de pompe (102; 104 ; 104') étant formé à partir de deux disques semi-conducteurs dans chacun desquels sont formés, d'une seule pièce avec ces derniers, un siège de soupape et un clapet de soupape, les deux disques semi-conducteurs étant assemblés de telle sorte qu'il est chaque fois formé, par un siège de soupape de l'un des disques semi-conducteurs et un clapet de soupape de l'autre disque semi-conducteur, un clapet de retenue passif (106, 108), l'un (106) des clapets de retenue passifs (106, 108) étant disposé dans une ouverture d'entrée traversant les deux disques semi-conducteurs, tandis que l'autre (108) des clapets de retenue (106, 108) est disposé dans une ouverture de sortie traversant les deux disques semi-conducteurs ;
la membrane de pompe (110; 122) augmentant

le volume ($V_0$) de la chambre de pompage, lors du déplacement de la première à la seconde position, sensiblement d'un volume de course ($\Delta V$) et réduisant le volume de la chambre de pompage (112), lors du déplacement de la seconde à la première position, sensiblement d'un volume de course ($\Delta V$),

caractérisée par le fait que le rapport e entre le volume de course ($\Delta V$) et le volume ($V_0$) de la chambre de pompage (112) répond, lorsque la membrane de pompe (110; 122) se trouve dans la première position, à l'équation suivante :

$$\varepsilon \geq \left( \frac{p_0}{p_0 - |\Delta p_{crit}|} \right)^{\frac{l}{\gamma}} - 1$$

où $p_0$ est la pression atmosphérique, $\gamma$ est le coefficient adiabatique, et $\Delta p_{crit}$ est la valeur de pression maximale, fonction de la géométrie de soupape et de l'humidification de soupape, requise pour ouvrir les soupapes.

2. Pompe à micromembrane suivant la revendication 1, caractérisée par le fait que le rapport $\varepsilon$ est au moins de 0,075.

3. Pompe à micromembrane suivant la revendication 1 ou 2, caractérisée par le fait que le dispositif d'entraînement (120) est un dispositif d'entraînement électrostatique dont l'actuateur électrostatique est formé par la membrane de pompe (122) et une contre-électrode (120), la membrane de pompe (122) étant réalisée sensiblement plane, de sorte qu'elle s'appuie, dans la première position extrême, en dehors de l'ouverture d'entrée et de l'ouverture de sortie, sur le corps de pompe (102).

4. Pompe à micromembrane suivant la revendication 1 ou 2, caractérisée par le fait que le dispositif d'entraînement est un dispositif d'entraînement piézoélectrique (100).

5. Pompe à micromembrane suivant l'une des revendications 1 à 4, dans laquelle le corps de pompe est constitue, de deux plaquettes semi-conductrices (102, 104 ; 104') assemblées à des faces principales de celles-ci, la soupape d'entrée et la soupape de sortie (106, 108) étant formées, chacune, par des sièges de soupape et des clapets de soupape gravés dans les disques semi-conducteurs (102, 104 ; 104') disposés dans des cuvettes de soupape définissant l'ouverture d'entrée et l'ouverture de sortie.

6. Pompe à micromembrane suivant la revendication 5, dans laquelle la plaquette semi-conductrice (102) orientée vers la membrane de pompe (110 ; 122) est amincie, pour définir une cuvette de soupape plane entre la surface, orientée vers la membrane de pompe, de la plaquette semi-conductrice (102) et la soupape d'entrée et la soupape de sortie.

7. Pompe à micromembrane suivant la revendication 5 ou 6, dans laquelle les plaquettes semi-conductrices (102, 104 ; 104') sont formées en silicium.

8. Procédé de production du corps de pompe pour une pompe à micromembrane suivant l'une des revendications 1 à 7, aux étapes suivantes consistant à:

   8.1 structurer une première surface principale d'un premier et d'un second disque semi-conducteur (200), pour déterminer une structure de clapet (202) de la soupape d'entrée et une structure de siège (204) de la soupape de sortie dans le premier disque et une structure de clapet de la soupape de sortie et une structure de siège de la soupape d'entrée dans le second disque ;
   8.2 former respectivement une structure de cuvette de clapet de soupape (206 ; 216) et une structure de cuvette d'ouverture de soupape (208 ; 218) selon un rapport prédéterminé avec les structures de clapet de soupape (202) et les structures de siège de soupape (204) dans une seconde surface principale de chacun du premier et du second disque semi-conducteur ;
   8.3 assembler les premières surfaces principales du premier et du second disque semi-conducteur, de telle sorte que chaque structure de clapet de soupape présente un rapport prédéterminé avec une structure de siège de soupape ;
   8.4 amincir au moins l'un des disques semi-conducteurs depuis la seconde surface principale ; et
   8.5 graver chacune des secondes surfaces principales du premier et du second disque semi-conducteur, au moins à l'endroit de la structure de cuvette de clapet de soupape et de la structure de cuvette d'ouverture de soupape, pour dégager les clapets de soupape et pour ouvrir les sièges de soupape.

9. Procédé suivant la revendication 8, dans lequel, à l'étape 8.4, les deux disques semi-conducteurs sont amincis depuis la seconde surface principale.

10. Procédé suivant la revendication 8 ou 9, présentant par ailleurs, avant l'étape 8.4, l'étape consistant à appliquer une couche d'oxyde (210) sur les premières surfaces principales de chacun des premier et second disques semi-conducteurs.

FIG.1

(Stand der Technik)

*FIG.2*

*FIG.3*

FIG.4

FIG.5

a)

202    204

200

b)

202    204

200

206    208

c)

210

d)

212

e)

208    206

f)

FIG.6

FIG.7

FIG.8